# EUROPEAN PATENT SPECIFICATION

(11) **EP 0 390 043 B1**
(45) Date of publication and mention of the grant of the patent: **01.09.1993**
(21) Application number: 90105730.7
(22) Date of filing: 26.03.1990
(51) Int. Cl.: A21C 9/06

(54) **An apparatus for making tortellini, ravioli, and the like stuffed pasta products on a commercial scale**
Vorrichtung zur Herstellung von Tortellini, Ravioli und ähnlichen gefüllten Pastaprodukten in grossen Mengen
Appareil de production de tortellini, ravioli et de produits de pâte farcis similaires à grande échelle

(30) Priority: 31.03.1989 IT 1998089
(43) Date of publication of application: 03.10.1990
(73) Proprietor: BARILLA G. e R. F.lli - Società per Azioni, 43100 Parma (IT)
(72) Inventor: Motta, Carmelo, I-20052 Monza, Milano (IT)
(74) Representative: Vannini, Torquato

(56) References cited:
- DE-A- 3 800 906
- FR-A- 2 109 690
- FR-A- 2 121 197
- FR-A- 2 428 403

## Description

This invention relates to an apparatus for making "tortellini", "ravioli", and the like stuffed pasta products on a commercial scale.

Pasta products of the above-mentioned kind are usually prepared by folding over and sealing portions of sheet dough having appropriate sizes and shapes around respective stuffing portions.

A machine is employed for the purpose, for instance one commonly referred to as a tortellini maker, at a single processing station whereof, means for cutting the sheet dough into plural portions aligned in an array of portions, means for laying the stuffing onto the severed portions of sheet dough, means for folding over and sealing such portions around the stuffing, and means for discharging the finished tortellini from the are operated alternately and successively.

The sheet dough is fed forward stepwise to that machine, and a single step advance takes place each time that an array or line of tortellini is discharged from the machine, that is on the machine being made accessible and ready to sever a fresh array of sheet dough portions.

Such prior machines, while being widely used and even advantageous in some respects, have a well-recognized drawback in that their throughput or their efficiency are fairly low. Attempts at speeding up the individual operations involved have been unsuccessful production-wise and have implied additional, non-negligible shortcomings from the standpoints of their construction and the quality of the product yielded.

The problem that underlies this invention is, therefore, that of providing an apparatus for making tortellini and the like stuffed pasta products, which has such constructional and performance characteristics as to overcome the above-noted drawback of a slow production rate, without implying constructional and operational difficulties.

Observation of conventional machines during their operation reveals that, on the one side, to achieve any significant savings of time, the tortellini forming operations, i.e. the operations of arranging an amount of stuffing onto a respective sheet dough portion, and of folding over and sealing that sheet dough portion around the stuffing to produce a respective one of the tortellini, can and should be carried out at a single processing station, and that on the other side, the overall time required to complete such operations is invariably longer than the time required to sever a corresponding array of sheet dough portions. In essence, it is found that the machine production rate is tied to the time required to complete the above-described tortellini forming operations.

In order to solve the technical problems of improved productivity for such machines, it has been proposed of physically isolating the severing function from the remaining functions, as by having the severing means function-wise independent of those provided to perform the other tortellini forming and discharging operations.

In view of the potentially higher throughput of the sheet dough severing unit than that of the tortellini forming unit, it has also been proposed of improving the productivity of a tortellini maker by equipping it with two or more forming units for each severing unit.

On the grounds of such considerations, the above technical problem is solved, according to the invention, by an apparatus having the features set forth in the characterizing part of Claim 1.

Further features and the advantages of an apparatus according to this invention will be more clearly appreciated from the following detailed description of a preferred embodiment thereof, to be read in conjunction with the accompanying drawings, where:

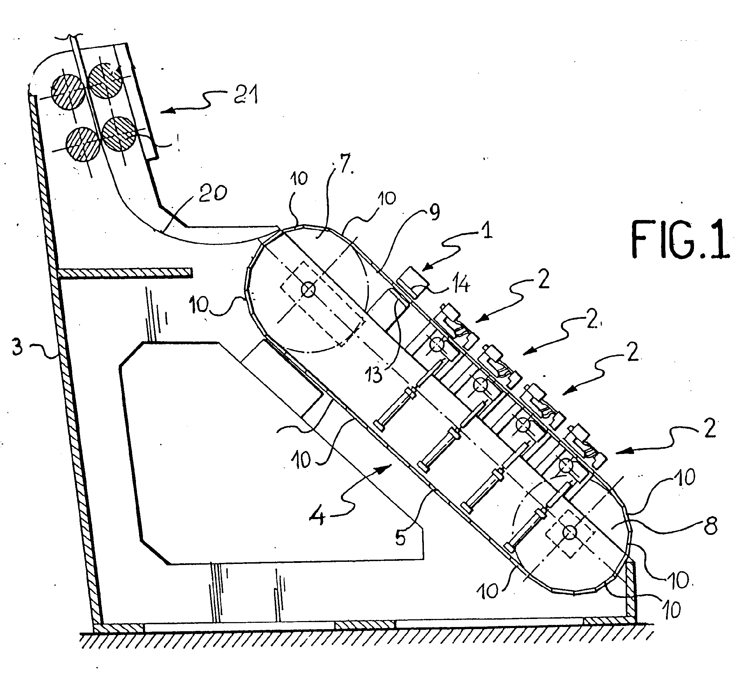

Figure 1 shows schematically an apparatus according to the invention in side elevation;
Figure 2 is an enlarged-scale side elevation view of a detail of the apparatus shown in Figure 1;
Figure 3 is a perspective view, drawn to a further enlarged scale of a detail of the apparatus shown in Figure 1; and
Figure 4 is an enlarged-scale detail view of Figure 2 as viewed from IV.

With reference to the drawing views, an apparatus for making tortellini according to the invention comprises a sheet dough severing station 1 and a plurality of successive tortellini forming stations, all alike and shown at 2, which are structurally independent of one another and laid in a row on a supporting structure 3.

A belt conveyor 4, basically of the type having plates and chains 5, 6, is supported and driven stepwise by respective pairs of sprocket wheels 7, 8.

The upper working run 9 of said belt conveyor 4 extends throughout the severing station 1 and successive plural forming stations 2.

Attached to the opposed chains 5, 6 of the belt conveyor 4 are the opposed short sides of plural rectangular metal plates 10 having a suitably substantial thickness dimension.

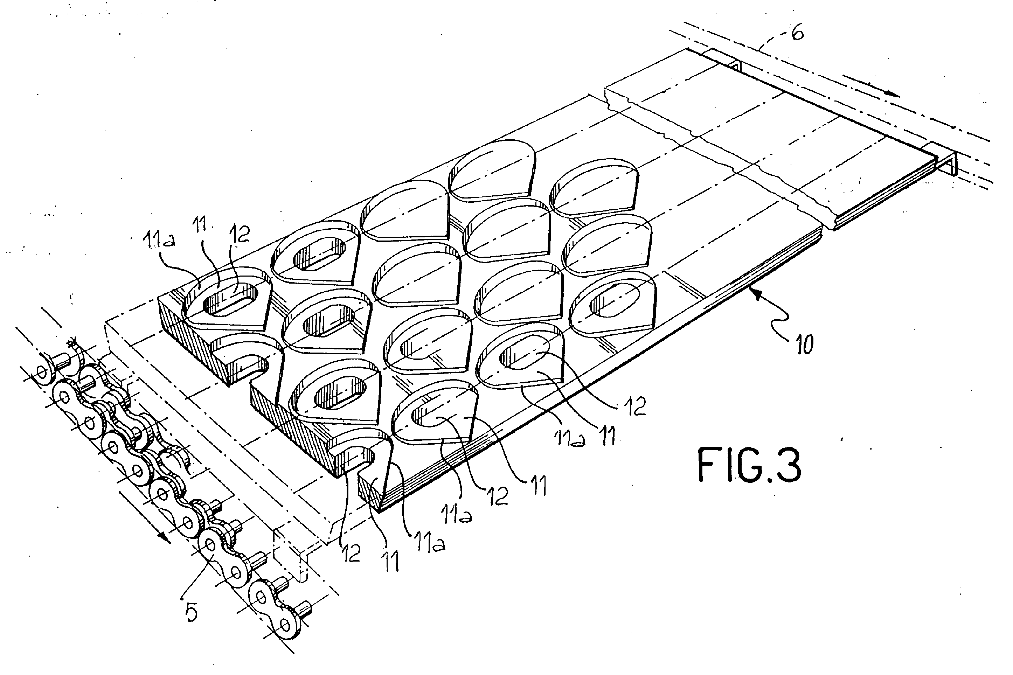

With reference to Figure 3, each plate 10 is formed, on its side facing outwards from the conveyor 4, with a plurality of identical recesses or depressions 11 having a flat bottom and being preferably a heart-shaped configuration with the tip pointing in the direction of advance of the belt conveyor 4. The depth of such recesses 11 is limited but in all cases greater than the thickness of the sheet dough from which the tortellini are to be formed.

Across each plate 10, the recesses 11 are distributed in a quincuncial pattern of a number of parallel lines equal to the number of the tortellini forming stations 2 provided for the inventive apparatus.

At each recess 11, the plate 10 is through-penetrated by a respective slotted hole 12 extending preferably with its long side parallel to the lines of recesses 11.

The sheet dough severing station 1 and the forming stations 2 are set mutually apart by a distance which is the equal or a multiple of the step advance distance of the belt conveyor 4, thereby a plate 10 will be always present at each of them.

The sheet dough severing station 1 consists essentially of a punch press having a fixed table 13, which extends beneath the working run 9 of the belt conveyor 4 parallel thereto, and a second, movable table 14 which is reciprocable toward and away from said fixed table 13. The movable table 14 is formed, on its side facing the fixed table, with a plurality of elevations, not shown, being the same size and shape as the recesses 11 in the plates 10 so as to engage in registry therewith, as explained hereinafter.

Active at the fixed table 13 are conventional means, not shown, for clamping a plate 10 thereto at a central location relatively to the movable table 14.

At that location, the recesses 11 in the plate 10 and matching elevations on the movable table 14 will form sheet dough severing means and backing means for the station 1. To properly sever the sheet dough, the edges 11a of the recesses 11 are provided sharp.

Means for forming and discharging the tortellini are active at each of the stations 2.

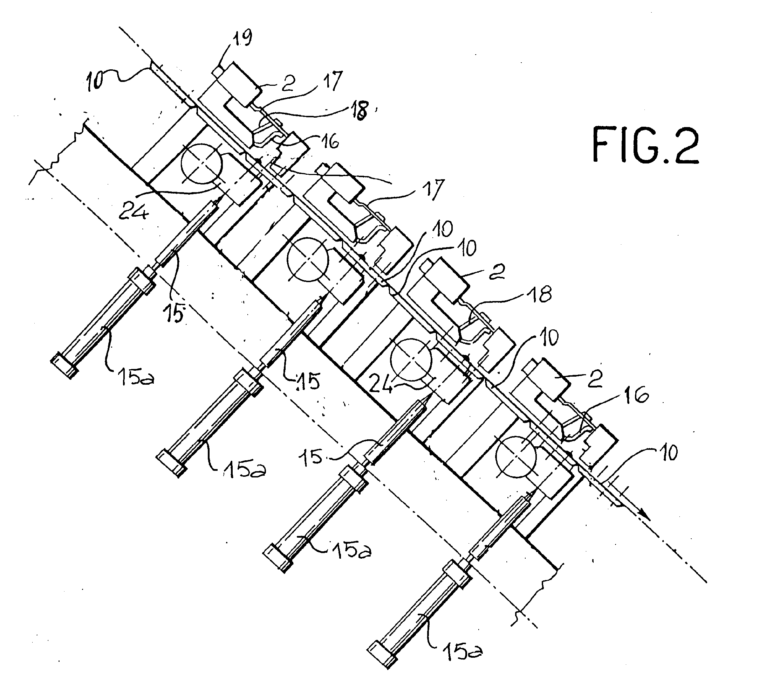

More specifically, and in accordance with a fundamental feature of this invention, said means for forming and discharging the tortellini, equipping each station 2, are active on a respective line of recesses 11 in a plate 10 currently located at the forming station of interest (Figure 2).

The tortellini forming means, which are quite conventional and, therefore, not discussed in any detail herein, comprise essentially fork-like means 15 which may be actuated by respective air-operated cylinders 15a to place a predetermined amount of the stuffing (R) onto severed sheet dough portions, folding and sealing means 16 and 17, respectively, for folding over the sheet dough portions around the stuffing and yielding sealed up tortellini, and means 18 for discharging the finished tortellini.

In a preferred embodiment, at each of the forming stations 2, the respective fork-like means 15 are carried at a location underlying the working run 9 of the belt conveyor 4, aligned to their respective line of recesses 11 in the plate 10 and adapted to engage through the clearance holes 12 in said recesses.

Along the straight path of travel of each of said fork-like means 15, beneath the run 9 of the conveyor 4, there is a device 24 operative to feed in the stuffing in predetermined amounts. This stuffing is picked up by the fork-like means 15 and, after being taken through the holes 12, is pushed against the sheet dough portions present in the recesses 11. Each sheet dough portion and respective stuffing are lifted off the respective recess 11 and processed through the folding and sealing means 16, 17.

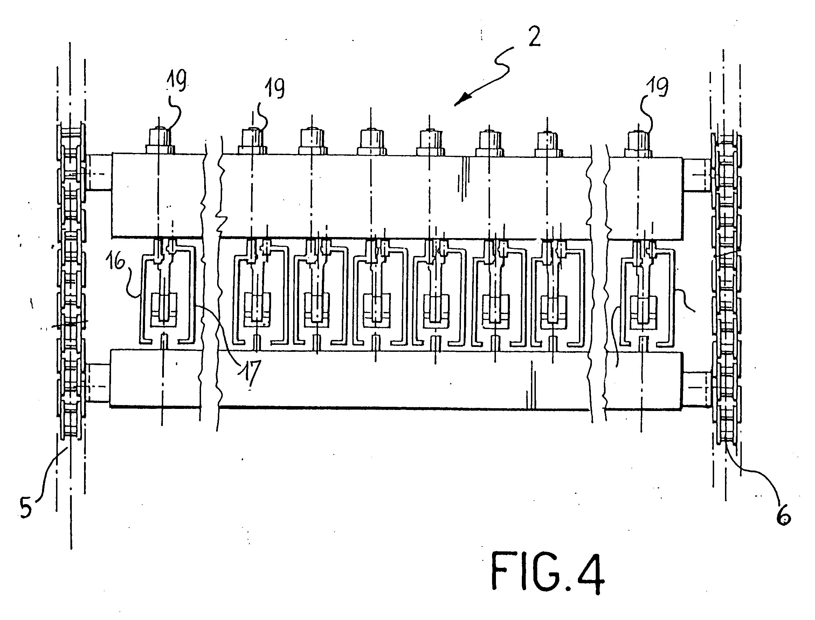

The folding and sealing means 16, 17 (Figure 4) comprise essentially arm pairs supported laterally of the slotted holes 12 in each recess 11, above the plate 10, and being driven by respective motive means shown schematically at 19.

Advantageously, the working run 9 of the belt conveyor 4 is laid to slope downwards, the sheet dough severing station 1 being located at a higher level than the subsequent forming stations 2. Such an arrangement is effective to assist the discharging of tortellini from the stations 2.

The operation of the inventive apparatus for making tortellini will be now described starting with a condition where sheet dough 20, after undergoing rolling and calibration to a selected thickness through a roll train schematically shown at 21, has been laid on the plates 10 at the inlet end of the belt conveyor 4, from which plates the sheet dough is then transferred stepwise to the severing station 1.

With the belt conveyor held stationary at station 1, the sheet dough 20 is cut into a plurality of heart-shaped portions, each received in a respective recess 11 in the plate 10 currently located at that station.

Simultaneously with this severing operation, forming operations are being performed at the successive stations 2, each carried out on one line of severed sheet dough portions. In particular, at the first forming station 2, i.e. the one lying next to the severing station 1, a plate 10 will be present wherein all the recesses 11 contain a respective severed portion of sheet dough, whilst present at the second forming station will be a plate 10 wherein one line of recesses 11 has no respective severed sheet dough portions therein, because these portions have been used during a previous operation step at the first forming station to produce tortellini which have been then discharged.

Thus, at each forward step or multiple of a step of the conveyor 4, at the severing station 1, a plurality of sheet dough portions will be cut to occupy all of the recesses 11 in a plate 10, whilst at the aggregate of the successive forming stations 2, a like plurality of tortellini will be made and discharged from a like plurality of corresponding plates 10.

It should be noted that these plates 10 serve a three-fold function as backing means for severing the sheet dough, trays adapted to receive the severed sheet dough portions, and means of transferring such portions to the next forming stations.

With an apparatus according to the invention, production rate is increased considerably over what had been attained heretofore with conventional tortellini makers, and this for substantially unchanged space and power requirements.

An additional significant advantage afforded by the apparatus of this invention is that the amount of waste from the severed sheet dough can be minimized by virtue of the peculiar layout of the recesses 11 across the tray-like plates 10.

## Claims

1. An apparatus for making tortellini and the like stuffed pasta products on a commercial scale, characterized in that it comprises a sheet dough severing station (1) including severing means and backing means (10,13,14) to cut off sheet dough (20) into respective sheet dough portions laid into a plurality of lines;
a plurality of tortellini forming stations (2) being structurally and operationally independent of one another and in the same number as said lines of severed sheet dough portions, set a distance apart in line with said sheet dough severing station (1), each forming station containing essentially fork-like means (15) for placing a predetermined amount of a stuffing (R) at severed sheet dough portions, means (16,17) for folding over and sealing up the sheet dough portions around the stuffing, and means (18) for discharging the finished tortellini, all these means (15, 16, 17, 18) being active at each of said forming stations (2) on a respective line of said severed sheet dough portions;
a belt conveyor (4) of the type having metal plates (10) driven stepwise through the aggregate of said severing (1) and forming (2) stations, each metal plate (10) of said belt conveyor (4) being provided, on its outward facing side from the belt conveyor (4), with a plurality of flat-bottom recesses (11) distributed in a number of lines equal to the number of said forming stations (2);
recesses (11) of the metal plate (10) when present at the severing station (1) constituting at the same time said backing means and sockets for receiving the severed sheet dough portions.

2. An apparatus according to Claim 1, characterized in that said recesses (11) are laid across each of said plates (10) in a quincuncial pattern.

3. An apparatus according to Claim 1, characterized in that the plates (10) are through-penetrated, at each of said recesses (11), by respective holes (12) wherethrough said substantially fork-like means (15) are passed axially to feed in stuffing (R) portions.

4. An apparatus according to Claim 3, characterized in that said clearance holes (12) have a slot-like elongate cross-sectional shape extending in the direction of said lines of recesses (11).

5. An apparatus according to Claim 1, characterized in that the working run (9) of the belt conveyor (4) slopes downwards, the severing station (1) being located at a higher level than the successive forming stations (2).

## Patentansprüche

1. Vorrichtung zur Herstellung von Tortellini und ähnlichen gefüllten Pastaprodukten in großen Mengen,
dadurch gekennzeichnet,
daß sie umfaßt
- eine Teigplatten-Trennstation (1) mit Trenn- und Stützmitteln (10, 13, 14) zum Abschneiden von Teigplatten (20) zu einzelnen in mehreren Linien gelegten Plattenteigportionen;
- mehrere, in der gleichen Anzahl wie die Linien der Plattenteigportionen vorhandene, in Aufbau und Funktion voneinander unabhängige Tortellini-Formungsstationen (2), welche in einem Abstand in einer Linie mit der Teigplatten-Trennstation (1) angeordnet sind, wobei jede Formungsstation im wesentlichen gabelförmige Mittel (15) zur Zuführung einer festgelegten Menge einer Füllung (R) auf die Plattenteigportionen, sowie Mittel (16, 17) zum Umfalten und Verschließen der Plattenteigportionen um die Füllung und Mittel (18) zur Ausgabe der fertigen Tortellini, wobei alle diese Mittel (15, 16, 17, 18) an jeder dieser Formungsstationen (2) auf einer Linie der genannten Plattenteigportionen arbeiten;
- Vertiefungen (11) der Metallplatte (10) die an der Trennstation (1) gleichzeitig als dieses Stützmittel und als Aufnahmestücke zur Aufnahme der geschnittenen Plattenteigportionen dienen.

2. Vorrichtung nach Anspruch 1, dadurch gekennzeichnet, daß die Vertiefungen (11) quer über jede der Platten (10) in einer quincunxialen Anordnung geformt sind.

3. Vorrichtung nach Anspruch 1, dadurch gekennzeichnet, daß die Platten (10) bei jeder dieser Vertiefungen (11) von zugeordneten Löchern (12) durchbrochen sind, durch die die im wesentlichen gabelförmige Mittel (15) zur Zuführung von Portionen der Füllung (R) axial geführt sind.

4. Vorrichtung nach Anspruch 3, dadurch gekennzeichnet, daß die freien Löcher (12) in Richtung der Reihen der Vertiefungen (11) einen langgezogenen, schlitzförmigen Querschnitt aufweisen.

5. Vorrichtung nach Anspruch 1, dadurch gekennzeichnet, daß der Arbeitsstrang (9) des Bandförderers (4) nach unten geneigt ist, wobei die Trennstation (1) auf einer Ebene oberhalb der nachfolgenden Formungsstationen (2) angeordnet ist.

## Revendications

1. Appareil de production de tortellinis et produits de pâte farcis similaires à grande échelle, caractérisé en ce qu'il comprend un poste de découpage de pâte en feuille (1) comportant des dispositifs de découpage et des dispositifs de support (10, 13, 14) pour couper la pâte en feuille (20) en portions de pâte en feuille respectives disposées en une multiplicité de lignes;
une multiplicité de postes formateurs de tortellinis (2) indépendants les uns des autres du point de vue de la structure et du fonctionnement et en nombre identique auxdites lignes de portions de pâte en feuille découpée, disposées à distance les uns des autres en alignement avec ledit poste de découpage de pâte en feuille (1), chaque poste formateur contenant des dispositifs sensiblement en forme de fourches (15) pour placer une quantité prédéterminée de farce (R) au niveau des portions de pâte en feuille découpée, des dispositifs (16, 17) pour replier et fermer les portions de pâte en feuille autour de la face, et un dispositif (18) pour évacuer les tortellinis terminés, tous ces dispositifs (15, 16, 17, 18) étant actifs au niveau de chacun desdits postes formateurs (2) sur une ligne respective desdites portions de pâte en feuille découpée;
un convoyeur à bande (4) du type comportant des plaques métalliques (10) entraînées par pas à travers l'ensemble desdits postes de découpage (1) et formateurs (2), chaque plaque métallique (10) dudit convoyeur à bande (4) étant munie, sur son côté tourné vers l'extérieur depuis le convoyeur à bande (4), d'une multiplicité d'évidements à fond plat (11) répartis en un nombre de lignes égal au nombre desdits postes formateurs (2);
les évidements (11) de la plaque métallique (10), lorsqu'elle est présente au niveau du poste de découpage (1), constituant en même temps lesdits dispositifs de support et des bases pour recevoir les portions de pâte en feuille découpée.

2. Appareil selon la revendication 1, caractérisé en ce que lesdits évidements (11) sont disposés sur chacune desdites plaques (10) selon une configuration en quinconce.

3. Appareil selon la revendication 1, caractérisé en ce que les plaques (10) sont traversées, au niveau de chacun desdits évidements (11), par des trous (12) respectifs par lesquels lesdits dispositifs sensiblement en forme de fourches (15) passent axialement pour introduire des portions de farce (R).

4. Appareil selon la revendication 3, caractérisé en ce que lesdits trous de dégagement (12) ont une forme en section droite allongée analogue à une fente qui s'étend dans la direction desdites linges d'évidements (11).

5. Appareil selon la revendication 1, caractérisé en ce que le brin actif (9) du convoyeur à bande (4) est incliné vers le bas, le poste de découpage (1) étant situé à un niveau supérieur à celui des postes formateurs (2) successifs.
